# FASCICULE DE BREVET EUROPEEN

(11) **EP 1 509 735 B1**
(45) Date de publication et mention de la délivrance du brevet: **13.06.2007**
(21) Numéro de dépôt: 02807503.4
(22) Date de dépôt: 26.08.2002
(51) Int. Cl.: F25D 31/00, F25D 3/08

(54) **APPAREIL DE REGULATION DE LA TEMPERATURE D'UN LIQUIDE, NOTAMMENT LE VIN**
VORRICHTUNG ZUM REGELN DER TEMPERATUR EINER FLÜSSIGKEIT, INSBESONDERE WEIN
APPARATUS FOR REGULATING THE TEMPERATURE OF A LIQUID, IN PARTICULAR WINE

(30) Priorité: 22.05.2002 FR 0206200
(43) Date de publication de la demande: 02.03.2005
(73) Titulaire: Becker Ganser, Edmund, 06250 Mougins (FR)
(72) Inventeur: Becker Ganser, Edmund, 06250 Mougins (FR)
(74) Mandataire: Burkard, Thierry
(86) Numéro de dépôt international: PCT/FR2002/002934
(87) Numéro de publication internationale: WO 2003/104732

(56) Documents cités:
- EP-A- 0 931 998
- GB-A- 2 222 578
- US-A- 4 531 383
- US-A- 5 456 090
- PATENT ABSTRACTS OF JAPAN vol. 015, no. 386 (M-1163), 30 septembre 1991 (1991-09-30) & JP 03 156292 A (FUJIKURA LTD), 4 juillet 1991 (1991-07-04)
- PATENT ABSTRACTS OF JAPAN vol. 2000, no. 19, 5 juin 2001 (2001-06-05) -& JP 2001 048244 A (YOSHIMI TOKUICHI), 20 février 2001 (2001-02-20)

## Description

L'invention concerne un appareil permettant de réguler par refroidissement la température d'un liquide, et plus particulièrement un vin.

Il est bien connu de tous les professionnels et tous les amateurs de vins de qualité que la température à laquelle est servie un cru est déterminante pour l'appréciation de ses qualités particulières notamment ses arômes.

Ainsi, il existe différentes tables de référence qui indiquent les fourchettes de températures idéales pour chaque type de vin ou cru.

L'amplitude des températures est très variable en fonction du type de vin concerné et il n'est pas toujours aisé d'obtenir puis de conserver la température idéale qui permettra à un vin de révéler toutes ses qualités, ceci en raison de nombreuses contraintes.

La première contrainte concerne les conditions de stockage et de conservation des bouteilles qui peuvent conduire à une température, soit trop élevée, soit trop basse au moment où la bouteille est prélevée en vue d'être servie.

Dans le cas où les bouteilles ne sont pas conservées dans des conditions satisfaisantes, c'est à dire en cave, elles seront le plus souvent trop chaudes et il sera à tout le moins nécessaire d'attendre un certain temps avant de les consommer, après avoir procédé à un refroidissement.

L'opération consistant à refroidir un vin puis de le maintenir à une température inférieure à la température ambiante est particulièrement délicate

Le risque est en effet de « casser » le vin, c'est-à-dire de lui faire perdre ses arômes et ses qualités gustatives propres en lui implosant une chute de température trop brutale.

Certaines personnes peu scrupuleuses ont recours à des méthodes empiriques et tout à fait condamnables, consistant à placer la bouteille à refroidir au réfrigérateur ou au congélateur pendant une certaine durée.

Il est bien évident que de telles méthodes ont des effets destructeurs sur les qualités du liquide et qu'elles ne sont absolument pas appropriées.

Or, il existe parfois, par exemple en restauration, un impératif de rapidité qui est incontournable. En effet, si l'amateur éclairé peut se permettre de patienter plusieurs heures pour déguster un vin fin dans un cadre privé, il n'en va pas de même lorsque le service est effectué dans un cadre professionnel, notamment en restauration.

Pour d'évidentes raisons de rentabilité et de crédibilité, il n'est pas possible pour un restaurateur ou son chef de cave d'exiger du client une attente de plusieurs heures pour déguster le cru choisi sur la carte. Il n'est pas non plus possible de prendre le risque d'un discrédit en servant un vin très ou trop refroidi, par une méthode non contrôlée et non progressive.

Il est donc nécessaire de pouvoir disposer de moyens permettant de porter et maintenir le vin à la température idéale de dégustation sans pour autant altérer ses qualités organoleptiques.

Diverses solutions ont été proposées pour assurer un refroidissement relativement rapide du liquide dans des conditions qui ne compromettent pas ses qualités gustatives.

Le document US 565 1254 décrit un récipient de forme circulaire à l'intérieur duquel on prévoit de placer un manchon circulaire dont la partie supérieure dépasse de l'extrémité ouverte du conteneur auquel il peut être solidarisé par l'intermédiaire de deux barres transversales.

L'espace compris entre le manchon et le conteneur est alors rempli avec de l'eau et l'ensemble est placé pendant un certain temps dans un congélateur.

Lorsque l'eau a gelé, on retire le tout du congélateur et on enlève le manchon, ce qui libère un espace de forme circulaire dans le conteneur, à l'intérieur duquel on peut placer une bouteille ou un récipient contenant le liquide.

Cette solution permet certes de refroidir un liquide de manière relativement rapide. Elle est cependant longue à mettre en oeuvre et surtout peu esthétique en cas d'utilisation dans le cadre par exemple d'un restaurant.

Le document US 6 196 017 décrit un insert conçu pour être introduit à l'intérieur d'un dispositif de refroidissement d'une bouteille de vin.

L'insert comporte un logement prévu pour recevoir un matériau ou un fluide refroidissant et est destiné à être placé à l'intérieur d'un conteneur à boisson. La bouteille contenant le liquide est ensuite introduite à l'intérieur de ce conteneur à boisson, de telle sorte que l'insert soit disposé entre la paroi du conteneur et l'un des côtés de la bouteille.

Cette modalité n'est pas plus satisfaisante dans la mesure où elle est longue et difficile à mettre en oeuvre, et d'un esthétisme discutable en cas d'utilisation hors du cadre privé.

Le document GB 2 340 591 décrit une solution plus intéressante, dans laquelle on utilise un insert conçu pour être introduit par le col d'une bouteille après avoir été réfrigéré.

L'insert décrit est composé d'un corps cylindrique creux fermé à son extrémité intérieure, et se terminant dans sa partie supérieure par deux rebords latéraux prenant appui sur le col de la bouteille et comportant chacun au moins un orifice passant, l'ensemble étant coiffé par un couvercle circulaire comportant des orifices périphériques pouvant venir en correspondance des orifices ménagés dans les rebords latéraux lorsque le couvercle est en position d'ouverture, de manière à autoriser le passage du liquide contenu dans la bouteille.

Ce dispositif est bien adapté, par exemple à la consommation de boissons dans un cadre sportif ou informel. Par contre, son utilisation dépend étroitement des dimensions du contenant et il n'est pas adaptable sur tout type de bouteille. Par ailleurs, l'écoulement du liquide par les orifices périphériques du couvercle suppose une rotation préalable de ce dernier pour l'amener dans la position adéquate, avec des risques de fuite ou d'épanchement indésirable sur les côtés de la bouteille, dans la mesure où il subsiste un espace résiduel entre les extrémités de l'insert et le couvercle.

Par ailleurs, aucune des méthodes de l'art antérieur connu ne permet de maîtriser avec précision la température de la boisson au moment où elle est servie, ni de maintenir cette température pendant un temps suffisant.

Accessoirement, les dispositifs connus peuvent induire des effets secondaires non souhaités notamment en restauration, tel qu'un décollement des étiquettes qui sont apposées sur la bouteille ou une humidification ou un écoulement des liquides sur le linge de table, qui est dans tous les cas du plus mauvais effet.

Il serait donc souhaitable de pouvoir disposer d'un appareil pouvant être utilisé de manière simple et rapide, et individuellement. Il est également souhaitable que cet appareil, tout en pouvant être utilisé sur une table, permette d'atteindre de manière relativement rapide la température adéquate et de maintenir ensuite cette dernière dans une fourchette stricte au fur et à mesure de la consommation des vins. Enfin, l'appareil devra autoriser des prélèvements de liquide sans risque d'écoulement ni d'oxydation ou d'altération du liquide en suite d'une exposition prolongé à l'air, et sans que cela n'exige des manipulations compliquées.

La présente invention se propose de remédier aux inconvénients de l'art antérieur tels qu'exposés ci-dessus et de répondre aux objectifs indiqués en proposant un appareil composé d'un insert réfrigéré prévu pour être introduit par le col d'une bouteille, comportant des moyens de préhension formant bouchon, et des moyens pour l'écoulement du liquide au travers de l'insert.

L'art antérieur le plus proche est constitué par les document US 4 531 383.

US 4 531 383 décrit un couvercle à vis pour un récipient isolant, comportant un bouchon et un capuchon. Le couvercle comporte un corps refroidissant cylindrique et creux, qui est plongé dans le récipient jusqu'à être immergé dans le liquide contenu à l'intérieur du récipient lorsque le couvercle est en place. En remplissant le corps au moyen d'un produit refroidissant réfrigérant approprié avant de fixer le couvercle sur le récipient, on peut abaisser la température du liquide et la maintenir un temps à ce niveau.

Ce dispositif n'a pour seul objet de refroidir le liquide qui est présent à l'intérieur du récipient, et l'insert ne comporte aucun moyen de communication vers l'extérieur pouvant permette au liquide contenu à l'intérieur du récipient d'être prélevé ou versé vers l'extérieur de ce récipient.

JP-A-03 156 293 concerne un corps de chauffe scellé à ses deux extrémités et contenant un liquide actif. Un accumulateur de chaleur est disposé sur la partie supérieure du corps. Le corps et l'accumulateur sont préalablement chauffés et le corps est ensuite introduit dans le liquide jusqu'à ce que la température du liquide s'équilibre avec celle du corps.

Ce dispositif, qui n'est destiné qu'à chauffer, ne permet pas le prélèvement de liquide à partir du contenant sans retrait préalable de la partie supérieure composée du corps et de l'accumulateur.

L'un des avantages particulier de l'invention est qu'elle permet le service de la boisson sans qu'il soit nécessaire de retirer l'insert de la bouteille.

La présente invention sera mieux comprise en référence à la description donnée ci-après d'un mode non limitatif de mise en oeuvre, et en référence aux dessins annexés dans lesquels :
- la figure (1) est une vue en coupe d'un appareil selon l'invention introduit à l'intérieur d'une bouteille, et
- la figure (2) est une vue de détail de la partie supérieure de l'appareil selon l'invention.

En référence aux figures annexées et plus particulièrement à la figure (1), l'appareil selon l'invention est composé d'un corps cylindrique (1) prévu pour être introduit dans le col (9) d'une bouteille (10) fermé à son extrémité inférieure (2b) et se terminant à son extrémité supérieure (2a) par des moyens de préhension (2).

Les moyens de préhension (2) sont constitués d'une pièce (3) ayant une section circulaire de diamètre supérieure à celui du col (9) et comportant une base tronconique (13) à l'extrémité supérieure (2a) du corps (1), agencée de telle manière qu'elle puisse s'emboîter sur ledit col (9) de la bouteille (10) une fois le corps (1) introduit dans la bouteille, pour former un bouchon. Dans ce but, les parois latérales de la base (13) vont en se rétrécissant vers l'intérieur.

Le corps cylindrique (1) est divisé en deux parties (1a) et (1b).

La partie inférieure (1b) qui représente de préférence environ les 2/3 de la longueur totale du corps (1) est prévue pour être au moins partiellement remplie au moyen d'un fluide (6) gelant à 0°C.

De préférence, le fluide consistera en un gel introduit dans le corps sous une pression comprise entre 12 et 18 bars, de telle sorte que les parois de l'appareil ne subissent pas de déformation lors de la congélation.

Les parties (1a) et (1b) du corps (1) sont séparées l'une de l'autre par un joint (7) fixe qui est mis en place après introduction du gel (6). Ainsi, la partie inférieure (1b) est totalement étanche et le gel ne pourra pas s'écouler dans la partie supérieure (1a). Cette dernière, qui représente sensiblement un tiers de la longueur totale du corps (1), est fixée par son extrémité supérieure à la pièce (3) qui en constitue le prolongement.

La partie supérieure (1a) du corps (1) comporte au moins une fente longitudinale (8) s'étendant sur toute sa longueur, et communiquant avec l'extérieur par l'intermédiaire d'un conduit (5) traversant ladite pièce (3) en son centre. Le conduit (5) débouche vers le bas à l'intérieur de la partie supérieure (1a) du corps (1) et est associé par son extrémité supérieure à un couvercle (4).

Bien évidemment, le nombre de fentes (8) pourra varier sans que cela remette en cause le fonctionnement de l'appareil.

Le couvercle (4) peut selon une variante de réalisation comporter un mécanisme de commande pour contrôler manuellement l'écoulement du liquide, par exemple une poignée ou un robinet (non représenté).

Un joint (11) pourra être disposé sur le pourtour de la base (13) de la pièce (3) faisant fonction de bouchon, afin d'assurer une totale étanchéité de l'ensemble ainsi formé lorsque l'appareil est introduit à l'intérieur d'une bouteille.

L'utilisation de l'appareil selon l'invention est particulièrement simple.

L'ensemble sera fourni prêt à l'usage, c'est-à-dire avec un corps (1) déjà rempli au moyen du gel (6) et les différents éléments déjà reliés les uns aux autres. Il suffira à l'utilisateur de placer l'appareil à l'intérieur d'un congélateur pendant une certaine durée, en fait jusqu'à durcissement du fluide (6), ce qui ne pose aucun problème dans le cadre de la restauration où l'on pourra avant chaque service placer un nombre suffisant d'appareils au congélateur afin de pouvoir disposer à tout moment lors du service d'une unité prête à l'emploi sans avoir à attendre.

Lorsque le gel (6) a durci à l'intérieur de la partie inférieure (1b) du corps (1), il suffira d'ouvrir la bouteille (10) et d'introduire l'appareil à l'intérieur dans le col (9).

En général, il est d'usage de goûter une petite quantité de vin immédiatement après retrait du bouchon de liège, afin de vérifier l'absence de tout défaut tel que des phénomènes de madérisation ou de bouchonnage.

Ceci permet de retirer une petite quantité de liquide et de dégager ainsi l'espace suffisant pour permettre l'introduction de l'appareil sans provoquer un refoulement de liquide excédentaire par le col de la bouteille.

Une fois l'appareil introduit dans la bouteille (10), on le maintient en position en enfonçant légèrement la pièce (3) à l'intérieur du col (9).

Si l'on souhaite ensuite servir du vin dans un verre, il suffira de manoeuvrer le couvercle (4) qui pourra avantageusement comporter une charnière (14).

En effet, le vin (15) qui est placé à l'intérieur de la bouteille (10) pourra s'écouler au travers des fentes longitudinales (8) pour rejoindre le conduit (5) traversant la partie médiane de la pièce (3). Il sera ainsi possible de servir la quantité de liquide souhaitée en ouvrant simplement le couvercle (4) qui permettra par ailleurs une fois refermé de protéger le liquide, par exemple contre une éventuelle oxydation.

Selon une forme de réalisation préférentielle, le corps (1) et ses différents éléments composants seront réalisés dans un acier de haute qualité, qui est un matériau totalement neutre à l'égard des vins de quelque sorte que ce soit.

L'appareil selon l'invention permet de manière à la fois simple et élégante d'assurer le maintien d'une température optimale de dégustation pendant une durée minimale de deux heures, ce qui est largement suffisant dans le cadre d'un repas en restauration.

Il a été remarqué à l'usage que l'utilisation de cet appareil permettait de stabiliser le température de manière beaucoup plus régulière et constante qu'au moyen de dispositifs tel que par exemple des seaux à glace.

La variation de température enregistrée sur une période de deux heures est inférieure à 2°, ce qui permet de rester dans les fourchettes de températures optimales qui sont généralement conseillées pour la dégustation des vins.

L'invention n'est bien évidemment pas limitée au mode de réalisation décrit ci-dessus à titre de simple exemple de mise en oeuvre.

Elle pourra au contraire recevoir toutes variantes ou modifications évidentes de l'homme de l'art sans que l'on sorte du cadre de l'invention comme define dans les revendications.

Par ailleurs, l'appareil selon l'invention est aisément adaptable à tous types de bouteilles, quelque soit leur forme ou leur dimension ou le diamètre du col.

Il sera ainsi possible de prévoir différents modèles d'appareils adaptables à tous types de contenant.

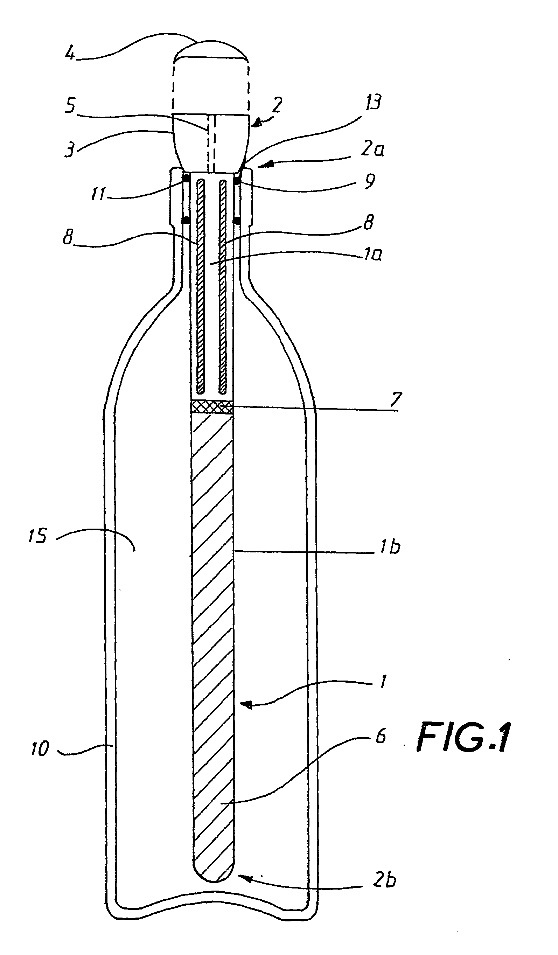

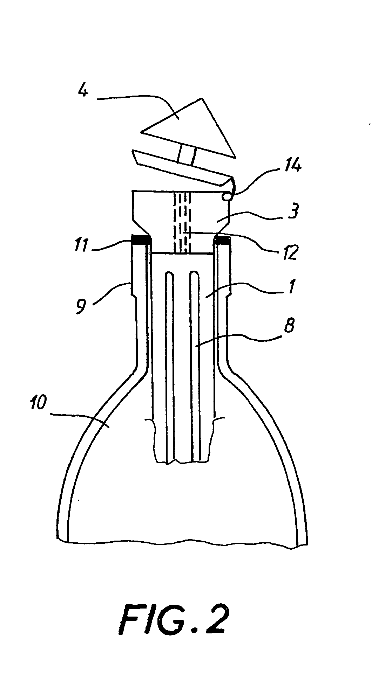

De plus, et comme illustré à la figure 2, le couvercle (4) associé à la pièce (3) dans la partie supérieure de l'appareil pourra recevoir toutes sortes de formes, ce qui permettra de donner à l'appareil une esthétique particulière qui rehaussera le prestige du service.

## Revendications

1. Appareil de régulation de la température d'un liquide présent à l'intérieur d'une bouteille, composé d'un corps cylindrique creux (1) réfrigéré prévu pour être introduit par le col (9) d'une bouteille (10), ledit corps étant fermé à son extrémité inférieure (2b) et se terminant par des moyens de préhension (2) à son extrémité supérieure (2a), constitués d'une pièce (3) de section circulaire de diamètre supérieur à celui du col (9) de la bouteille (10) et comportant une base tronconique (13) dont les parois latérales vont en se rétrécissant vers l'intérieur pour former un bouchon lorsque l'appareil est introduit dans la bouteille, **caractérisé en ce que** le corps (1) est composé de deux parties (1a) et (1b) séparées l'une de l'autre par un joint (7) fixe, la partie inférieure (1 b) étant remplie au moyen d'un fluide (6) gelant à 0°C et la partie supérieure (1a) étant fixée par son extrémité supérieure à la pièce (3) et comportant au moins une fente longitudinale (8) s'étendant sur toute sa longueur, la pièce (3) étant traversée en son centre par un conduit (5) communiquant par le haut avec l'extérieur et débouchant vers le bas à l'intérieur de la partie supérieure (1a) du corps (1) la au moins une fente longitudinale (8) communiquant avec l'extérieur par l'intermédiare dudit conduit (5).

2. Appareil suivant la revendication 1, **caractérisé en ce que** l'extrémité supérieure du conduit (5) est associée à un couvercle (4).

3. Appareil suivant la revendication 2, **caractérisé en ce que** le couvercle (4) comporte dans sa partie supérieure un mécanisme de commande de l'écoulement du liquide.

4. Appareil suivant la revendication 3, **caractérisé en ce que** le mécanisme de commande de l'écoulement du liquide est un robinet.

5. Appareil suivant l'un des revendications précédentes, **caractérisé en ce qu'**un joint (11) est disposé sur le pourtour de la base tronconique (13) de la pièce (3).

6. Appareil suivant l'un des revendications précédentes, **caractérisé en ce que** le corps (1) est en acier.

## Claims

1. Apparatus for regulating the temperature of a liquid placed inside a bottle, comprising a hollow cylindrical refrigerated body (1) designed to be inserted through the neck (9) of a bottle (10), said body being closed at its lower end (2b) and tipped with grip means (2) at its upper end (2a), consisting of a piece (3) with a circular section, the diameter of which is greater than that of the neck (9) of the bottle (10) and comprising a truncated base (13) the side walls of which taper inwards to form a plug when the apparatus is inserted in the bottle, **characterized in that** the body (1) is comprised of two parts (1a) and (1b), separated from one another by a fixed joint (7), the lower part (1 b) being filled with a fluid (6) which freezes at 0°C and the upper part (1a) being fixed by its upper end to the piece (3), and comprising at least one longitudinal slot (8) extending over its whole length, the piece (3) being crossed in the middle by a conduit (5) communicating at the top with the outside and emerging at the bottom inside the upper part (1a) of the body (1), at least one longitudinal slot (8) communicating with the outside via said conduit (5).

2. Apparatus according to claim 1, **characterized in that** the upper end of the body (1) is associated with a cap (4).

3. Apparatus according to claim 2, **characterized in that** the cap (4) comprises a mechanism in its upper part to control the flow of the liquid.

4. Apparatus according to claim 3, **characterized in that** the mechanism for controlling the flow of liquid is a tap.

5. Apparatus according to according to one of the previous claims, **characterized in that** a joint (11) is arranged on the periphery of the truncated base (13) of the piece (3).

6. Apparatus according to according to claim 1, **characterized in that** the body (1) is in steel.

## Patentansprüche

1. Vorrichtung zum Regeln der Temperatur einer Flüssigkeit im Inneren einer Flasche, bestehend aus einem gekühlten zylindrischen Hohlkörper (1), vorgesehen zum Einführen durch den Hals (9) einer Flasche (10), wobei dieser Körper an seinem unteren Ende (2b) geschlossen ist und an seinem oberen Ende (2a) Greifflächen (2) besitzt, bestehend aus einem Teil (3) mit rundem Querschnitt größer als der Hals (9) der Flasche (10) und mit einer kegelstumpfförmigen Basis (13), deren Seitenwände sich nach innen verengen, um einen Verschluss zu bilden, wenn die Vorrichtung in die Flasche eingeführt wird, **dadurch gekennzeichnet, dass** der Körper (1) aus zwei Teilen (1 a) und (1 b) besteht, die voneinander getrennt sind durch eine feste Dichtung (7), wobei der untere Teil (1 b) mit einem Fluid (6) gefüllt ist, das bei 0°C gefriert, und der obere Teil (1a) an seinem oberen Ende am Teil (3) befestigt ist und mindestens einen Längsschlitz (8) über die gesamte Länge hat, wobei Teil (3) in der Mitte von einem Rohr (5) durchquert wird, das oben mit der Umgebung in Verbindung steht und unten ins Innere des oberen Teils (1 a) des Körpers (1) einmündet. Der mindestens eine Längsschlitz (8) steht über das genannte Rohr (5) mit der Umgebung in Verbindung.

2. Vorrichtung nach Anspruch 1, **dadurch gekennzeichnet, dass** das obere Ende des Rohres (5) mit einem Deckel (4) verbunden ist.

3. Vorrichtung nach Anspruch 2, **dadurch gekennzeichnet, dass** der Deckel (4) in seinem oberen Teil eine Vorrichtung zum Regeln des Abfließens der Flüssigkeit besitzt.

4. Vorrichtung nach Anspruch 3, **dadurch gekennzeichnet, dass** die Vorrichtung zum Regeln des Abfließens der Flüssigkeit ein Hahn ist.

5. Vorrichtung nach einem der vorhergehenden Ansprüche, **dadurch gekennzeichnet, dass** eine Dichtung (11) am Umfang der kegelstumpfförmigen Basis (13) des Teils (3) angeordnet ist

6. Vorrichtung nach einem der vorhergehenden Ansprüche, **dadurch gekennzeichnet, dass** der Körper (1) aus Stahl ist.
